# EUROPEAN PATENT SPECIFICATION

(11) **EP 0 674 109 B1**
(45) Date of publication and mention of the grant of the patent: **25.02.1998**
(21) Application number: 95301695.3
(22) Date of filing: 14.03.1995
(51) Int. Cl.: F16B 13/12, F16B 19/10, F16B 29/00, B21K 1/64

(54) **Insert nut and fastener**
Einsatzmutter und Befestigungselement
Ecrou-insert et élément de fixation

(30) Priority: 22.03.1994 GB 9405655
(43) Date of publication of application: 27.09.1995
(73) Proprietor: AVDEL TEXTRON LIMITED, Welwyn Garden City, Hertfordshire AL7 1EZ (GB)
(72) Inventor: Brewer, Jonathan Lee, Dunstable, Bedfordshire (GB); Denham, Keith, Welwyn Garden City, Hertfordshire (GB)
(74) Representative: Treacher, Alan Leslie

(56) References cited:
- FR-A- 1 299 495
- GB-A- 619 174
- US-A- 2 333 277
- US-A- 2 871 749
- US-A- 4 391 559

## Description

For the purpose of facilitating assembly together of members such as, for example, thin metal panels, it is known to provide a screw retaining hole in a thin panel by installing in a suitable hole in the panel a so-called insert nut or threaded insert.

The insert nut, or threaded insert provides a peripheral surface or surfaces defining a hole into which a threaded screw or bolt can be inserted and retained by engagement with the peripheral surface or surfaces. The peripheral surface or surfaces are usually, but not necessarily, threaded or otherwise shaped to interengage with the thread of the screw or bolt. However, when intended to be engaged by a self-tapping screw, the peripheral surface or surfaces may be smooth, and reliance is then placed upon the self-tapping screw to cut or form a suitable means of interengagement with these surfaces. Hence, the term "insert" is used hereinafter to refer generally to an insert nut or threaded insert whether its peripheral surface or surfaces are smooth or threaded, or otherwise shaped to interengage with the thread of a screw or bolt.

Thus, a second member having a hole can be secured, by means of a screw or bolt in conjunction with the insert, to the first member in which the insert is installed.

Where a high torque is needed to be applied to the screw, and particularly where the screw needs to be removed and replaced, it is necessary to provide a high resistance to relative rotation between the insert and the first member. It is known to make the exterior of the insert, and the hole in the member, of polygonal shape, e.g. hexagonal or square.

An insert nut in accordance with the preamble of claim 1 is e.g. known from EP-A-0 369 327.

The problem is to provide an insert which is simple (and hence economical) in design and manufacture, easy to instal, robust, and allows the screw to be removed and replaced without significant loss of retention.

Furthermore, in the past it has been necessary first to instal the insert in the first member in one operation, secondly to apply a second member, and thirdly to drive a screw through the second member into the insert.

The invention provides an insert nut for use in a panel having a hole of suitable shape, which insert nut comprises a shank and a radially enlarged preformed head at one end of the shank, the insert having a bore extending longitudinally throughout the head and the shank, the shank having, in cross section, a polygonal external shape and substantially uniform outer dimensions throughout its length and having a plurality of slots extending longitudinally towards the head from the end of the shank remote from the head and radially outwardly from the bore, whereby at least part of the shank is divided into a plurality of longitudinally extending legs each leaving a root integrally joined to the rest of the insert at or adjacent to the head, each leg presenting a thread-engaging surface within the bore, and each leg having a thickness, in a direction radially of the bore, which is increased in a portion of the leg remote from the head as compared to the thickness of the leg nearer the head, whereby the bore is constricted, characterised in that the insert has been formed from an intermediate blank having a head and a shank comprising a plurality of legs spaced apart circumferentially by radially and longitudinally extending slots and having radially inner thread engaging surfaces which are substantially uniformly spaced apart throughout their lengths, and radially outer exterior faces sloping outwardly progressively from their head ends to the ends remote from the head, the insert having been formed from the blank by deforming the legs radially inwardly about their ends adjacent to the head until the exterior of the shank in cross section is of substantially uniform dimensions along its length.

Preferably the radial thickness of each leg increases progressively, from a position at the root of the leg adjacent the preformed head, towards the remote end of the leg.

The thread-engaging faces of the bore may be preformed with suitable screw-threads, or this may be omitted and a self-tapping screw may be used.

According to a further feature of the invention, an insert nut as aforesaid is formed from an intermediate blank which had a plurality of legs spaced apart circumferentially by radially and axially extending slots, the radially inner faces of the legs carrying parts of a screwthread of substantially uniform diameter throughout its length and the radially outer faces of the legs sloping outwardly progressively from their head ends to the ends remote therefrom,
the legs then having been deformed radially inwardly about their ends adjacent the head until the exterior of the shank is of substantially uniform cross-section along its length.

The invention includes a fastener comprising an insert nut as aforesaid, in combination with a screw which is engaged with the thread-engaging surfaces of the nut to such an extent that the screw and nut are in interference fit but the legs are not significantly forced apart.

Preferably the head of the screw, or a washer assembled on the screw adjacent to the head, projects radially substantially beyond the head of the insert, whereby the fastener may be used to attach to a panel having a polygonal hole as aforesaid a second member having a hole, which hole overlies the polygonal hole and has a size and shape such as to allow the head of the insert to enter it but not to allow the aforesaid screw head or washer to enter it, attachment of the member to the panel being achieved by inserting the shank of the insert through the two holes until the head of the insert abuts the panel, and then rotating the screw to secure the insert in the panel as aforesaid and also to clamp the member to the panel.

A specific embodiment of the invention will now be described by way of example and with reference to the accompanying drawings, in which:-
Figure 1 is an axial longitudinal section through an insert;
Figure 2 is an end elevation of the insert;
Figure 3 is a side elevation of the insert;
Figures 4, 5 and 6 are views corresponding to Figures 1, 2 and 3 respectively but showing an intermediate blank from which the insert of Figures 1, 2 and 3 was formed;
Figure 7 is a perspective exploded view of a fastener comprising the insert and a screw, and two panels which are to be secured together by means of the fastener;
Figure 8 is an elevation showing the two panels and the assembled fastener about to be inserted through them;
Figure 9 is a view similar to Figure 8 but shows the fastener inserted in the panels and about to be installed; and
Figure 10 is a view similar to Figure 9 but shows the fastener installed and securing the two panels together.

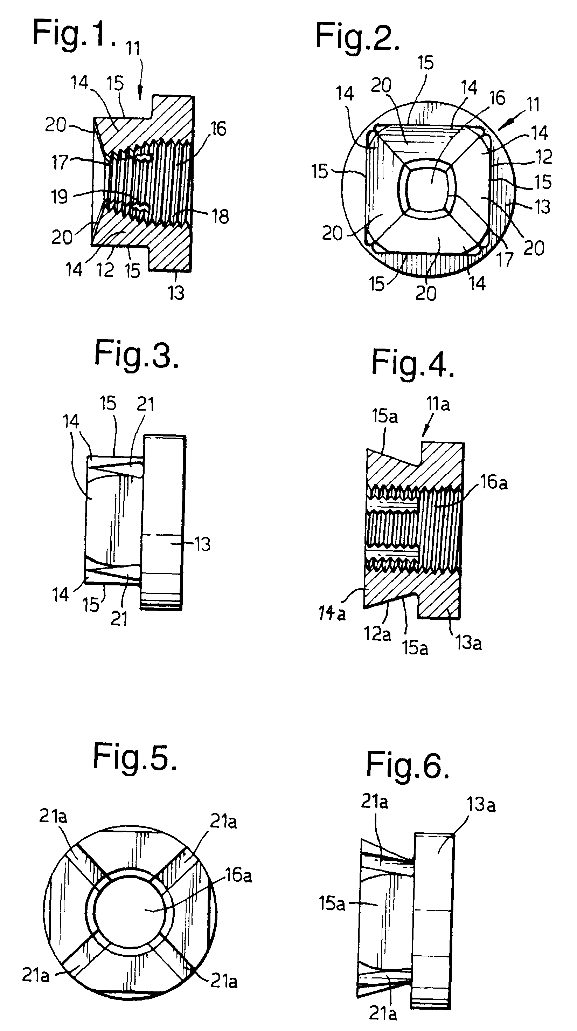

Referring first to Figures 1 to 3, the insert nut 11 of this example is made of zinc-plated steel and comprises a shank 12 and a radially enlarged head 13 at one end of, and integral with, the shank. The head 13 is in the form of a cylindrical flange of uniform thickness and circular plan. The shank comprises four longitudinally extending legs 14 each joined at one end to the head. Each leg has a substantially flat outer or exterior face 15 at right angles to the head 13 and also at right angles to the exterior faces 15 of the two legs adjacent to it. These four faces 15 thus provide the shank with a substantially square external cross-sectional shape of substantially uniform dimensions throughout the length of the shank.

The insert has a bore 16 extending throughout its length i.e. throughout both the head 13 and the shank 12. The four legs 14 have inwardly facing thread-engaging surfaces which face into the bore 16. In this example these thread-engaging surfaces are pre-formed with screw-threads 17 to facilitate threaded engagement with a suitable screw or bolt which may be inserted into the bore. However, alternatively the screw-threads 17 could be omitted, the thread-engaging surfaces of the legs 14 being unthreaded but engageable by a suitable self-tapping screw.

A portion 18 of the bore within the head 13 is of uniform diameter. However, the radial thickness of the legs 14 is increased progressively away from the head so that the bore 16 is thereby constricted. Thus the portion 19 of the bore within the legs 14 of the shank progressively reduces in diameter from the junction between the head and the shank 13 to the remote free end of the shank, as is illustrated in Figure 1. The outer face 15 of each leg is substantially trapezoidal in shape, its width at its free end being greater than its width where it joins the head 13. The end face 20 of each leg is also trapezoidal in shape, its width at its radially outer edge (where it meets the outer face 15) being greater than its width at its radially inner edge (where it meets the end of the bore 16). Each end face 20 is inclined slightly to a plane at right angles to the bore, as illustrated in Figure 1. Each leg 14 is separated from the next by a tapering gap 21, which is of maximum width at the head 13 and progressively reduces in width towards the free ends of the legs, where adjacent legs meet along line contact.

The insert is formed from an intermediate blank which is illustrated in Figures 4, 5 and 6, in which corresponding parts of the intermediate blank have corresponding reference numerals with the suffix "a". The blank 11a is generally similar to the insert 11 in that it has a head 13a, a bore 16a and four legs 14a. However, in the blank 11a the bore 16a is of uniform diameter throughout its length so that the thread-engaging faces of the legs are substantially uniformly spaced apart throughout their length. The four legs 14a are spaced apart each from the next by a slot 21a of uniform thickness which extends longitudinally and radially of the bore 16a. Since the thickness of each leg 14a of the blank progressively increases away from the head 11a (as in the insert 11), the exterior face 15a of each leg 14a slopes outwardly progressively from their head ends towards the ends remote from the head. The blank is manufactured in this shape since it is relatively easy to make the bore 16a of uniform cross-section throughout its length. The blank lla is formed into the insert 11 by deforming the four legs 14a radially inwardly about their ends adjacent the head 13a until their exterior faces are at right angles to the head and the exterior of the shank formed by the legs is substantially uniform along its length, and the side faces of adjacent legs meet at the free ends. The blank is then zinc plated (or given other appropriate surface treatment).

The insert 11 illustrated in Figures 1, 2 and 3 can be used by inserting into a suitable square hole (in which the shank is a clearance fit) in a panel until the head 13 abuts the near face, and driving a suitable screw into the bore. This would re-form the bore 16 to a substantially uniform diameter, thus forcing the legs 14 radially apart to form a blind head. The panel is thus clamped between the preformed head and the blind head of the insert, and the screw can then be unthreaded and removed if desired. The installed insert thus provides a threaded hole in the panel. The insert can also be used to join together two or more panels of suitable total thickness.

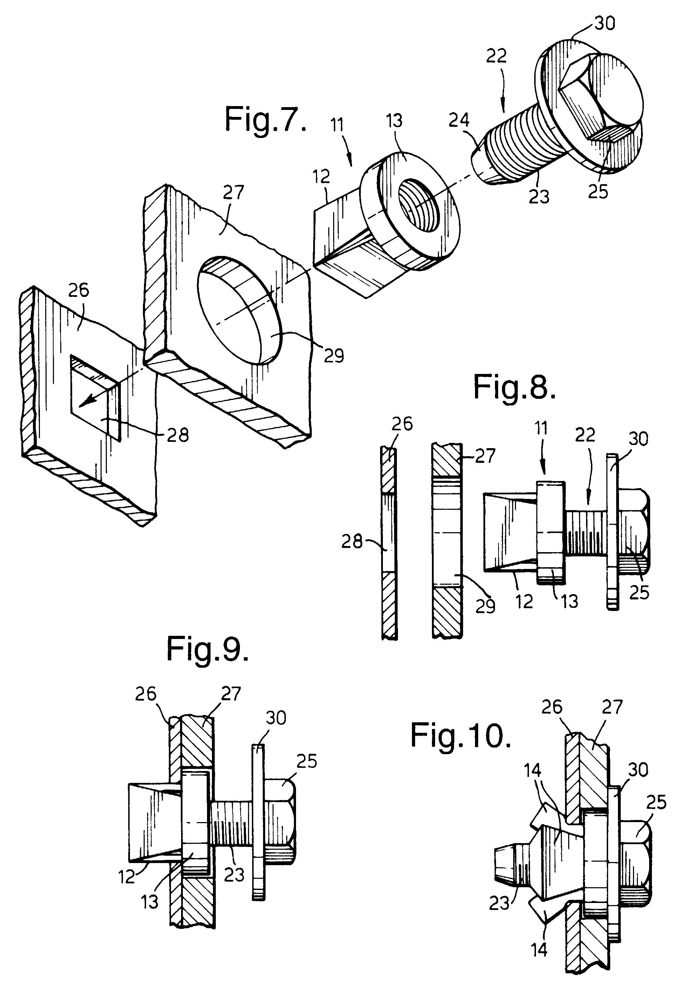

Advantageously the insert can be pre-assembled with a suitable screw to provide a fastener which can be handled and used as a convenient unit. An example is illustrated in Figures 7 and 8. A suitable screw 22 having a shank 23 (which is suitably threaded to engage the thread in the insert bore) is pre-assembled with the insert by screwing one into the other until the leading end of the screw is in interference fit with the threaded surfaces of the insert legs to such an extent that the screw is retained in the insert but the legs are not significantly forced apart (Figure 8). The shank 23 of the screw 22 has its leading end tapered as at 24 (Figure 7) to assist in such engagement and in the subsequent driving of the screw to force the legs apart.

In this example, the screw 22 has a head which, in addition to having a hexagonal wrenching or driving portion 25, is also formed with an enlarged flange 30 adjacent the shank 23. (Effectively the flange 30 is a washer integral with the screw head, and could alternatively be provided as a separate washer, if desired). The important point is that the diameter of the screw head flange 30 is substantially larger than the diameter of the head 13 of the insert 11. The fastener can thus be used to releasably join together two panels 26, 27 as illustrated in Figures 7, 8, 9 and 10, in a single installation action, as will now be described.

The rear panel 26 is provided with a square hole 28 which is a clearance fit on the square shank 12 of the insert 11. The front panel 27 is provided with a circular hole 29 of a diameter which is larger than that of the head 13 of the insert 11 but is smaller than that of the flange 30 of the screw 22. The front panel 27 is also slightly thicker than the thickness of the insert head 13. As illustrated in Figures 8 and 9, the panels 26 and 27 are arranged (maybe initially spaced slightly apart) with the two holes 28, 29 in alignment. The fastener is then inserted through the holes so that the insert shank 12 enters the square hole 28 and protrudes behind it, with the insert head 13 in contact with the front face of the back panel 26 and inside the hole 29 on the front panel 27, as illustrated in Figure 9. The screw 22 is then rotated by a suitable tool, such as an air-driven torque wrench, applied to its hexagonal head 25. This action both instals the insert 11 permanently in the back panel 26 (in the way previously described), and drives the screw into the insert to secure the front panel 27 to the back panel 26, as illustrated in Figure 10. The front panel 27 can be removed from the back panel by removing the screw 22 from the insert 11, after which the screw can later be re-inserted into the insert.

Instead of the shank having a square polygonal shape in cross section, formed by four legs, it could have for example three legs providing a triangular shape, or six legs providing a hexagonal shape.

The invention is not restricted to the details of the foregoing example.

## Claims

1. An insert nut (11) for use in a panel (26) having a hole (28) of suitable shape, which insert nut (11) comprises a shank (12) and a radially enlarged preformed head (13) at one end of the shank (12), the insert (11) having a bore (16) extending longitudinally throughout the head (13) band the shank (12).
the shank (12) having, in cross section, a polygonal external shape (15) and substantially uniform outer dimensions throughout its length and having a plurality of slots (21) extending longitudinally towards the head (13) from the end of the shank (12) remote from the head (13) and radially outwardly from the bore (16), whereby at least part of the shank (12) is divided into a plurality of longitudinally extending legs (14) each leaving a root integrally joined to the rest of the insert at or adjacent to the head (13), each leg (14) presenting a thread-engaging surface within the bore (16), and each leg (14) having a thickness, in a direction radially of the bore (16), which is increased in a portion of the leg (14) remote from the head (13) as compared to the thickness of the leg (14) nearer the head (13), whereby the bore (16) is constricted, characterised in that the insert (11) has been formed from an intermediate blank (11a) having a head (13a) and a shank (12a) comprising a plurality of legs (14a) spaced apart circumferentially by radially and longitudinally extending slots (21a) and having radially inner thread engaging surfaces which are substantially uniformly spaced apart throughout their lengths, and radially outer exterior faces (15a) sloping outwardly progressively from their head ends to the ends remote from the head (13a), the insert (11) having been formed from the blank (11a) by deforming the legs (14a) radially inwardly about their ends adjacent to the head (13a) until the exterior of the shank (12a) in cross section is of substantially uniform dimensions along its length.

2. An insert nut (11) as claimed in claim 1, in which the radial thickness of each leg (14) increases progressively, from a position at the root of the leg (14) adjacent the preformed head (13), towards the remote end of the leg (14).

3. An insert nut (11) as claimed in either of claims 1 or 2, in which the thread-engaging surfaces of the legs (14) are pre-formed with suitable screw threads (17).

4. An insert nut as claimed in either of claims 1 or 2, in which the thread-engaging surfaces of the legs are not pre-formed with screw threads but can be threadedly engaged by a suitable self-tapping screw.

5. A fastener comprising an insert nut (11) as claimed in any of the preceding claims, in combination with a screw (22) engaged with the thread-engaging surfaces of the nut (11) to such an extent that the screw (22) and insert nut (11) are in interference fit, but the legs (14) are not significantly forced apart.

6. A fastener as claimed in claim 5, in which the head (25,30) of the screw (22), or a washer assembled on the screw adjacent to the head, projects radially substantially beyond the head (13) of the insert (11), whereby the fastener may be used to attach to a panel (26) having a polygonal hole (28) as aforesaid a second member (27) having a hole (29), which hole (29) overlies the polygonal hole (28) and has a size and shape such as to allow the head (13) of the insert (11) to enter it but not to allow the aforesaid screw head (25,30) or washer to enter it, attachment of the member (27) to the panel (26) being achieved by inserting the shank (12) of the insert (11) through the two holes (28,29) until the head (13) of the insert (11) abuts the panel (26), and then rotating the screw (22) to secure the insert (11) in the panel (26) as aforesaid and also to clamp the second member (27) to the panel (26).

## Patentansprüche

1. Einsatzmutter (11) zur Verwendung in einem Paneel (26), welches ein Loch (28) zweckdienlicher Form aufweist, wobei die Einsatzmutter (11) einen Schaft (12) und einen radial vergrößerten, vorgeformten Kopf (13) an einem Ende des Schaftes (12) aufweist, und die Einsatzmutter (11) mit einer Bohrung (16) versehen ist, die sich in Längsrichtung durch den Kopf (13) und den Schaft (12) erstreckt, wobei der Schaft (12) im Querschnitt eine polygonale Außenform (15) und im wesentlichen gleichbleibende Außenabmessungen über seine Länge aufweist, und mit einer Vielzahl von Schlitzen (21) versehen ist, die sich in Längsrichtung von dem vom Kopf (13) entferntliegenden Ende des Schaftes in Richtung des Kopfes (13) und radial nach außen von der Bohrung (16) erstrecken, wodurch mindestens ein Teil des Schaftes (12) in eine Vielzahl sich in Längsrichtung erstreckender Schenkel (14) unterteilt ist, von denen jeder eine einstückig mit dem Rest des Einsatzes am oder nahe dem Kopf (13) einstückig verbundene Wurzel beläßt, jeder Schenkel (14) eine Gewindeeingriffsfläche in der Bohrung (16) darbietet und jeder Schenkel (14) eine Dicke in radialer Richtung der Bohrung (16) aufweist, die in einem Teil des Schenkels (14), der entfernt vom Kopf (13) liegt, im Vergleich zur Dicke des Schenkels (14) näher am Kopf (13) zunimmt, wodurch die Bohrung (16) verengt ist, dadurch gekennzeichnet, daß der Einsatz (11) aus einem Zwischenrohling (lla) geformt wurde, welcher einen Kopf (13a) und einen Schaft (12a) aufweist, der eine Vielzahl von im Abstand um den Umfang durch radial und in Längsrichtung verlaufende Schlitze (21a) gehaltene Schenkel (14a) aufweist, und ferner radial innenliegende Gewindeeingriffsflächen, welche im wesentlichen gleichbleibende Abstände zueinander über ihre Längen haben, und ferner radiale Außenflächen (15a), die von ihren Kopfenden zu den vom Kopf (13a) entfernten Enden fortschreitend ansteigen, wobei der Einsatz (11) aus dem Rohling (lla) dadurch geformt wurde, daß die Schenkel (14a) um ihre Enden nahe dem Kopf (13a) radial nach innen verformt wurden, bis das Äußere des Schaftes (12a) im Querschnitt über die Länge im wesentlichen gleichbleibende Abmessungen aufweist.

2. Einsatzmutter (11) nach Anspruch 1, dadurch gekennzeichnet, daß die radiale Dicke jedes Schenkels (14) von einer Stelle an der Wurzel des Schenkels (14) nahe dem vorgeformten Kopf (13) fortschreitend in Richtung des entfernt liegenden Endes des Schenkels (14) zunimmt.

3. Einsatzmutter (11) nach einem der Ansprüche 1 oder 2, dadurch gekennzeichnet, daß die Gewindeeingriffsflächen der Schenkel (14) mit zweckdienlichen Schraubengängen (17) vorgeformt sind.

4. Einsatzmutter nach Anspruch 1 oder 2, dadurch gekennzeichnet, daß die Gewindeeingriffsflächen der Schenkel nicht mit Gewindegängen vorgeformt sind, sondern durch eine zweckdienliche selbstgewindeschneidende Schraube in gewindemäßigem Eingriff gelangen können.

5. Befestigungselement mit einer Einsatzmutter (11) nach einem der vorstehenden Ansprüche in Kombination mit einer Schraube (22), die in Eingriff mit den Gewindeeingriffsflächen der Mutter (11) in einem derartigen Maße steht, daß die Schraube (22) und die Einsatzmutter (11) in Klemmpassung miteinander stehen, die Schenkel (14) jedoch nicht merklich auseinandergedrückt sind.

6. Befestigungselement nach Anspruch 5, dadurch gekennzeichnet, daß der Kopf (25, 30) der Schraube (22) oder eine auf der Schraube nahe dem Kopf angeordnete Scheibe radial erheblich über den Kopf (13) des Einsatzes (11) vorsteht, wodurch das Befestigungselement verwendbar ist, an einem Paneel (26) mit einem polygonalen Loch (28), wie oben beschrieben, angebracht zu werden, wobei ein zweiter Bauteil (27) mit einem Loch (29) vorgesehen ist, dessen Loch (29) das polygonale Loch (28) überlagert und eine Größe und Form aufweist, die derart ist, daß der Kopf (13) des Einsatzes (11) in dieses eindringen kann, der oben erwähnte Schraubenkopf (25, 30) oder die Scheibe nicht eindringen kann, wobei die Befestigung des Bauteils (27) an dem Paneel (26) dadurch erfolgt, daß der Schaft (12) des Einsatzes (11) durch die beiden Löcher (28, 29) eingeführt wird, bis der Kopf (13) des Einsatzes (11) an dem Paneel (26) anliegt, und anschließend die Schraube (22) gedreht wird, um den Einsatz (11) in dem Paneel (26) in der obigen Weise zu befestigen, und gleichzeitig das zweite Bauteil (27) an dem Paneel (26) festzuklemmen.

## Revendications

1. Ecrou prisonnier (11) destiné à être utilisé dans un panneau (26) comportant un trou (28) d'une forme appropriée, lequel écrou prisonnier (11) comprend un téton (12) et une tête préformée élargie radialement (13) à une extrémité du téton (12), le prisonnier (11) comportant un alésage (16) s'étendant longitudinalement à travers la tête (13) et le téton (12),
le téton (12) présentant, en section transversale, une forme extérieure polygonale (15) et des dimensions extérieures sensiblement uniformes sur toute sa longueur, et comportant une pluralité de fentes (21) s'étendant longitudinalement en direction de la tête (13) depuis l'extrémité du téton (12) distante de la tête (13) et radialement vers l'extérieur à partir de l'alésage (16), grâce à quoi au moins une partie du téton (12) est divisée en une pluralité de pattes (14) s'étendant longitudinalement, laissant chacune un pied réuni de façon solidaire au reste du prisonnier au niveau de la tête (13) ou à proximité de celle-ci, chaque patte (14) présentant une surface de mise en prise par filetage à l'intérieur de l'alésage (16), et chaque patte (14) ayant une épaisseur, dans la direction radiale de l'alésage (16), qui augmente dans une partie de la patte (14) éloignée de la tête (13) comparée à l'épaisseur de la patte (14) plus près de la tête (13), grâce à quoi l'alésage (16) est resserré, caractérisé en ce que le prisonnier (11) a été formé à partir d'une ébauche intermédiaire (11a) comportant une tête (13a) et un téton (12a) comprenant une pluralité de pattes (14a) espacées suivant la circonférence par des fentes s'étendant radialement et longitudinalement (21a) et comportant des surfaces radialement intérieures de mise en prise par filetage qui sont espacées de façon sensiblement uniforme sur toute leur longueur, et des faces extérieures radialement externes (15a) s'inclinant progressivement vers l'extérieur depuis leurs extrémités de tête jusqu'aux extrémités éloignées de la tête (13a), le prisonnier (11) ayant été formé à partir de l'ébauche (11a) en déformant les pattes (14a) radialement vers l'intérieur à proximités de leurs extrémités adjacentes à la tête (13a) jusqu'à ce que l'extérieur du téton (12a), en section transversale, soit de dimensions sensiblement uniformes sur toute sa longueur.

2. Ecrou prisonnier (11) selon la revendication 1, dans lequel l'épaisseur radiale de chaque patte (14) augmente progressivement, depuis un emplacement au pied de la patte (14) adjacent à la tête préformée (13), en direction de l'extrémité éloignée de la patte (14).

3. Ecrou prisonnier (11) selon l'une ou l'autre des revendications 1 ou 2, dans lequel les surfaces de mise en prise par filetage des pattes (14) sont préformées avec des filetages (17) appropriés.

4. Ecrou prisonnier selon l'une ou l'autre des revendications 1 ou 2, dans lequel les surfaces de mise en prise par filetage des pattes ne sont pas préformées avec des filetages, mais peuvent être saisies par filetage grâce à une vis auto-taraudeuse appropriée.

5. Dispositif de fixation comprenant un écrou prisonnier (11) selon l'une quelconque des revendications précédentes, en combinaison avec une vis (22) en prise avec les surfaces de mise en prise par filetage de l'écrou (11) à un point tel que la vis (22) et l'écrou prisonnier (11) soient en ajustement serré, mais que les pattes (14) ne soient pas écartées de façon significative.

6. Dispositif de fixation selon la revendication 5, dans lequel la tête (25, 30) de la vis (22), ou une rondelle montée sur la vis à proximité de la tête, dépasse radialement de façon sensible au-delà de la tête (13) du prisonnier (11), grâce à quoi le dispositif de fixation peut être utilisé pour fixer à un panneau (26), comportant un trou polygonal (28) comme décrit ci-dessus, un second élément (27) comportant un trou (29), lequel trou (29) recouvre le trou polygonal (28) et présente une taille et une forme telles qu'elles permettent à la tête (13) du prisonnier (11) d'y pénétrer mais ne permette pas à la tête de vis (25, 30) ou à la rondelle citée ci-dessus d'y pénétrer, la fixation de l'élément (27) au panneau (26) étant réalisée en introduisant le téton (12) du prisonnier (11) à travers les deux trous (28, 29) jusqu'à ce que la tête (13) du prisonnier (11) bute sur le panneau (26), et en tournant ensuite la vis (22) afin de fixer le prisonnier (11) dans le panneau (26) tel que décrit ci-dessus et de serrer également le second élément (27) contre le panneau (26).
